# EUROPEAN PATENT APPLICATION

(11) **EP 4 831 599 A1**
(43) Date of publication of application: **28.10.2026**
(21) Application number: 25172382.1
(22) Date of filing: 24.04.2025
(51) Int. Cl.: G01J 3/28

(54) **DEVICE AND METHOD FOR ANALYSIS OF OPTICAL SPECTRUM**

(71) Applicant: PhotonPath S.r.l., 20158 Milano (IT)
(72) Inventor: BORGA, Piero, 20158 Milano (IT); DAMIANI, Elena, 20158 Milano (IT); TOSO, Fabio, 20158 Milano (IT); FAGIANI, Luca, 20158 Milano (IT); OLIVEIRA MORAIS DE AGUIAR, Douglas, 20158 Milano (IT); GUGLIELMI, Emanuele, 20158 Milano (IT)
(74) Representative: Tirloni, Bartolomeo

(57) **Abstract**

Device (1) and method for analysis of optical spectrum of an optical signal, the device (1) comprising an input port (2), an output photodetector (3) and an optical path (4) that optically connects the input port (2) to the output photodetector (3), one or more optical filter elements (50) and a reference optical module (5) comprising a passive reference optical filter element (8) and structured to allow the device (1) to selectively assume a calibration configuration in which the reference optical filter element (8) is optically connected to the optical path (4) to make the reference optical filter element (8) integral part of the optical path (4), and an operational configuration in which the reference optical filter element (8) is excluded from the optical path (4), wherein the reference optical filter element (8) is structured such that a free spectral range of a transfer function of the reference optical filter element (8) is smaller than each free spectral ranges of a respective transfer function of each of the one or more optical filter elements (50), wherein the method comprises performing:
- a first phase comprising introducing a first optical signal to the device (1) arranged in the calibration configuration, identifying a plurality of reference peaks of a reference transfer function (FdT_{ref}) and storing in memory a respective reference frequency (p₁) of each respective peak;
- a second phase comprising introducing a second optical signal to the device arranged in the calibration configuration, maximizing for each respective reference frequency (p₁) an optical intensity of the second optical signal at the output photodetector (3) to obtain a respective optimal operational parameter (OPopt) for each optical filter elements (50) and determining a respective calibration curve as a function of each respective optimal operational parameter;
- a third phase comprising analysing an optical spectrum of a third optical signal as a function of each respective calibration curve of each optical filter element of said device arranged in the operational configuration.

## Description

### Technical field of the invention

The present invention relates to a device, and a respective method, for analysis of optical spectrum.

### State of the Art

The present invention belongs to the field of photonics, i.e. the set of the technologies and the methods for the generation, and/or the transmission, and/or the processing and/or the reception of optical signal.

The term "optical" refers to an electromagnetic radiation not necessarily falling strictly within the visible optical band (i.e. indicatively 400-700 nm), but more generally falling in a band wider than the visible optical band, for example including the near infrared (e.g. wavelength between about 700 nm and about 2 µm).

Devices for analysis of optical spectrum (also called OSA, from the English "optical spectrum analyser") are known, used to analyse the optical spectrum of an optical signal. The expression "optical spectrum" typically refers to the power distribution (e.g. expressed in dBm or Watt) of the optical signal as a function of the wavelength or frequency.

By "photodetector" it is meant an optoelectronic component structured for transducing a respective optical input signal into an electrical signal (current and/or voltage) representative of an optical intensity of the respective optical input signal.

The terms "upstream", "downstream", "interposed", "input", "output", "cascade" refer to the direction of propagation of the considered optical signal. The term "directly", in combination with "upstream", "downstream" etc., implies the absence of further interposed elements (except the connecting optical waveguide).

By "optical coupler" it is meant an optical component capable of distributing an optical power entering a first port between a pair of second output ports. For example, an optical coupler comprises a pair of first ports, a pair of second ports and a pair of optical branches (e.g. semiconductor optical waveguides) each connecting a respective first port to a respective second port, wherein the two optical branches are mutually optically coupled at a respective optical coupling tract interposed between the respective first port and the respective second port. Examples of optical couplers are tunable directional optical couplers (also called TDCs, from the English "tunable directional coupler"), power dividers, MMls (Multi mode interferometers), Y-branches interferometers, Star couplers, MZls.

By "free spectral range" or FSR referred to a transfer function of an optical filter element or of the OSA device, it is meant the distance between two consecutive peak repetitions of such transfer function.

Document US 2017/0331550 A1 discloses an OSA comprising a modulator, an integrated optical filter and a photodetector.

### Summary of the invention

In the context of the aforementioned devices for analysis of optical spectrum, the Applicant has made the following considerations (hereinafter, where reference is made to the wavelength of the optical signal, similar considerations also apply in terms of frequency).

First of all, the Applicant considers it particularly advantageous to be able to determine the optical spectrum of an optical signal with high resolution, i.e. to be able to determine an optical intensity of a plurality of optical sub-signals each comprising a respective sub-range of wavelengths, such as each sub-range of wavelengths is as narrow as possible (and the sum of the sub-ranges analysed fully includes the wavelength range of the optical signal of origin). This allows to obtain an optical spectrum having a desired precision and which is as faithful as possible to the effective distribution of optical intensity per unit wavelength of the optical signal of origin.

To this end, it is advantageous to produce a device for analysis of optical spectrum comprising at least one optical filter stage of the input optical signal capable of filtering the optical signal to allow the transmission (e.g. towards a photodetector downstream of the optical filter stage) of only a portion of the optical signal corresponding to a sub-range of wavelengths as narrow as possible. This translates into the realization of a device whose optical filter stage is characterized by an overall transfer function (e.g. obtained from the product, or convolution, of the individual transfer functions of the optical filter elements that realize the filter stage) comprising the periodic repetition of a (single) peak of desired width (e.g. the full width at half maximum, also known as FWHM): the smaller the width, the higher the achievable resolution. The range of wavelengths subtended by the aforesaid peak is known as passband.

Furthermore, in order to achieve the abovesaid overall transfer function, typically each optical filter element is calibrated to know the precise positioning, in the frequency and/or wavelength domain, of its individual transfer function (e.g. of at least a peak of such individual transfer function) as a function of an operational parameter, such as the electric current or voltage at which an actuator acting on the filter element is operated. In other terms, a calibration curve for each optical filter element is obtained, which correlates the values of the operational parameter of the actuator to the corresponding frequency positions of the peaks of the individual transfer function of the optical filter element connected to the actuator.

However, the Applicant has observed that the known devices for optical spectrum analysis may be subject to deterioration over time. In particular, prolonged operation of such actuators can lead to progressive degradation phenomena of the actuators themselves, including the aging of the active material of the actuator, oxidation of metallic components, and/or long-term thermal effects, which, especially in thermal actuators, as well as in electro-optic actuators, can lead to a drift of the abovesaid calibration curve, with a loss of correspondence between the values of the operational parameter and the corresponding frequency positions of the peaks of the individual transfer function of the filter element.

In other words, the Applicant has realized that, as a consequence of the aforesaid degradation phenomena, the calibration curve of one or more of the optical filter elements may vary in an unknown manner over time. For example, such calibration curves can vary such that for a predetermined value of the operational parameter does not correspond anymore the respective peak frequency value originally set.

As a consequence, during operation of the OSA device, this leads to a misalignment of the individual transfer function of the several optical filter elements of the device for a predetermined value of operational parameter, since to such predetermined value of operational parameter does not correspond anymore the exact frequency position of a respective peak of one or more individual transfer functions of the optical filter elements of the device. In turn, this leads to misalignment of the frequency peaks of one or more individual transfer functions of the optical filter element composing the device, leading to a widening of the passband of the overall transfer function of the device and/or variations of the measured optical intensity and/or an increase in crosstalk effects, with consequent worsening of the corresponding performances, for example in terms of achievable resolution.

The Applicant has therefore faced the problem of analysing an optical spectrum of an optical signal with desired resolution and precision over time.

According to the Applicant, the aforementioned problem is solved by a device for optical spectrum analysis in accordance with the attached claims and/or having one or more of the following features.

According to an aspect, the invention relates to a device for analysis of optical spectrum of an optical signal.

Preferably the device comprises an input port.

Preferably the device comprises an output photodetector.

Preferably the device comprises an optical path.

Preferably said optical path develops from said input port to said output photodetector to optically connect the input port to the output photodetector.

Preferably said device comprises one or more optical filter elements. Preferably said one or more optical filter elements are arranged between said input port and said output photodetector. Preferably each of said one or more optical filter elements forms a respective portion of said optical path.

Preferably said device comprises a reference optical module. Preferably said reference optical module is arranged along said optical path. Preferably said reference optical module comprises a reference optical filter element.

Preferably said reference optical filter element is a passive optical filter element.

Preferably said reference optical module is structured to allow said device to selectively assume a calibration configuration in which said reference optical filter element is optically connected to said optical path to make the reference optical filter element integral part of said optical path, and an operational configuration in which the reference optical filter element is excluded from said optical path.

Preferably said reference optical filter element is structured such that a free spectral range of a transfer function of said reference optical filter element is smaller than each free spectral range of a respective transfer function of each of said one or more optical filter elements.

According to another aspect, the invention relates to a method for analysis of an optical spectrum of an optical signal.

Preferably said method comprises providing the device for analysis according to the present invention.

Preferably said method comprises performing a first phase comprising:
- arranging said device in said calibration configuration;
- (with said device in said calibration configuration) introducing a first optical signal as input to said device and obtaining a reference transfer function of said device;
- identifying a plurality of reference peaks of said reference transfer function due to said reference optical filter element being integral part of said optical path, and storing in memory a respective reference frequency of each reference peak of said plurality of reference peaks.

Preferably said method comprises, subsequently to said performing said first phase, performing a second phase comprising:
- arranging said device in said calibration configuration;
- (with said device in said calibration configuration) introducing a second optical signal as input to said device;
- for each respective reference frequency, maximizing an optical intensity of said second optical signal at said output photodetector by tuning at least one operational parameter of each of said one or more optical filter elements to obtain a respective optimal operational parameter for each of said one or more optical filter elements;
- for each of said one or more optical filter elements, determining a respective calibration curve as a function of each respective optimal operational parameter and of each reference frequency.

Preferably said method comprises, subsequently to said performing said second phase, performing a third phase comprising:
- arranging said device in said operational configuration;
- (with said device in said operational configuration) analysing an optical spectrum of a third optical signal as a function of each respective calibration curve of each optical filter element of said device.

In the context of the present application, by "passive" optical filter element it is meant an optical filter element devoid of any actuators capable of varying an optical refractive index of the filter element and thus adjusting the position of any peaks of the corresponding individual transfer function within the frequency (and/or wavelength) domain.

In the context of the present application, by the term "peaks" it is meant a portion of a transfer function representing a local or absolute maxima of such transfer function, having a very narrow width (e.g. in case of ring resonator) or a more large width (e.g. in case of MZI), which in any case can be associated, with desired accuracy, to a single frequency value, independently from the fact that such peak is actually a peak or a wider local maxima.

According to the Applicant, the reference optical module as above described allows the device to maintain the desired resolution and precision over time.

In fact, as it will be further explained from now on, the passive reference optical filter element can be used as fixed calibration reference over time, even after long time from the entrance into service of the device, from which the calibration curve of each of the one or more optical filter element of the OSA device can be recalibrated at any time, in order to restore the desired resolution and precision.

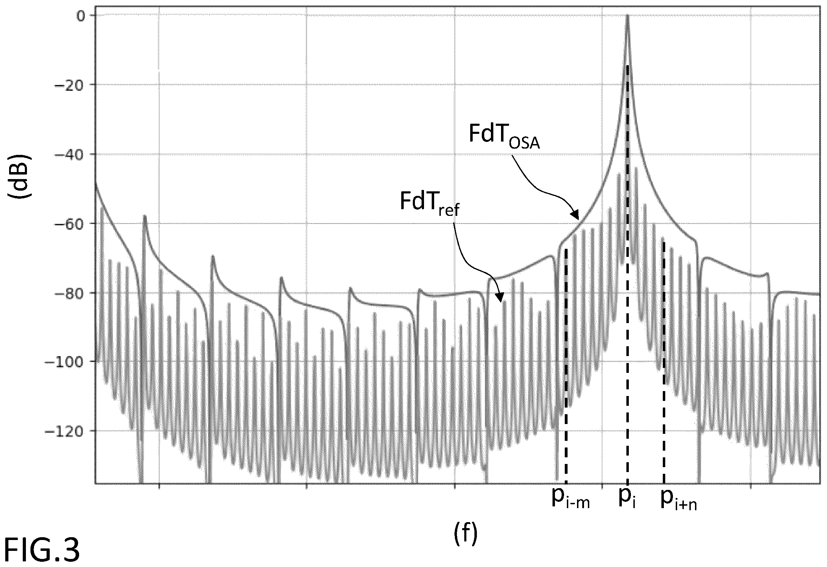

In particular, the presence of the passive reference optical filter element, with the device in the calibration configuration, therefore with a light signal that passes through all the one or more optical filter elements and also through the passive reference optical filter element, allows to produce (by the convolution of the individual transfer functions of all the one or more optical filter element and the transfer function of the reference optical filter element), within the overall transfer function of the OSA device, a plurality of repeated respective reference peaks due to the presence of the passive reference optical filter element, as for example shown in figure 3. According to the Applicant, the respective frequency values of such reference peaks, once retrieved and stored (for example in a memory of an elaboration unit), can be used as fixed calibration frequency values in order to perform a recalibration of the device when needed, with the desired certainty that such frequency values do not vary over time.

In fact, since the reference optical filter element is a passive filter, and therefore is devoid of any actuators which can modify the frequency values of such reference peaks, the abovesaid degradation phenomena linked to the presence of the actuator are eliminated and the reference peaks remain stable over time, each at the respective frequency value initially recorded in the first (calibration) phase (e.g. within laboratory).

On the other hand, the fact that the reference optical filter element can be selectively excluded from the optical path prevents the reference optical filter element from disturbing the overall transfer function of the device during normal operation (when the peaks of each individual transfer function of the optical filter elements have to be aligned with each other).

Consequently, since such respective reference peaks represent fixed maxima (at least local maxima) of the overall transfer function of the OSA device (in calibration configuration), the Applicant has observed that, in order to recalibrate the OSA device, it suffices to maximize, e.g. by tuning the respective operational parameter for each of the one or more optical filter elements, the optical intensity at the output photodetector for one or more (preferably all) the respective reference peaks in order to obtain a respective new calibration curve for each of the one or more optical filter elements, thus restoring the desired resolution and precision.

In other terms, the reference optical module allows to arrange at any time a fixed frequency reference (in terms of plurality of fixed frequency peaks) on the basis of which it is possible to perform recalibration whenever needed, with the substantial certainty that such peaks can be assumed fixed in frequency since the reference optical filter element is passive.

In addition, according to the Applicant, the smaller free spectral range (FSR) of the transfer function of the reference optical filter element, compared to the free spectral range of each respective transfer function of the optical filter elements, leads to the frequency peaks corresponding to the passive reference optical filter element being repeated within the lowest peak repetition of the optical filter element having the lowest FSR, thus being more prominent and/or easier to be detected within the overall transfer function of the OSA device, simplifying the identification of the reference peaks.

In addition, the integration of the reference optical filter module directly within the device enables on-site recalibration, eliminating the necessity of removing the device from its operational location and transporting it to a dedicated calibration facility or laboratory, with a subsequent reinstallation of the device at its original location, minimizing operational costs and downtime typically associated with external calibration methods.

Moreover, the absence of any active source, such as a laser source, within the device, significantly reduces the complexity of the manufacturing process of the device.

The present invention, in one or more of the above aspects, may exhibit one or more of the following preferred features.

Preferably said free spectral range of the transfer function of said reference optical filter element is at least two, more preferably at least four, times smaller than said each free spectral range of a respective transfer function of each of said one or more optical filter elements. In this way a desired number of repetitions is present, without over crowding the transfer function of superfluous reference peaks.

Preferably said reference optical module comprises an input optical switch and an output optical switch.

Preferably said input optical switch has an (single) input port, and a first and a second output port. Preferably said input optical switch is optically connected to a (remaining) portion of said optical path through said (single) input port of said input optical switch. With "(remaining) portion of the optical path" referred to a connection of an optical component to such portion, it is meant the rest of the optical path with exception of the optical component, both when the optical component is always integral part of the optical path (e.g. the above optical switches, the one or more optical filter elements, etc.), and when the optical component is (selectively) made integral part of the optical path, i.e. in the calibration configuration, e.g. the reference optical filter element.

Preferably said output optical switch has a first and a second input port and an (single) output port.

Preferably said output optical switch is optically connected to a respective (remaining) portion of said optical path through said (single) output port of said output optical switch.

One or more of the previous features allows to maintain the module structurally simple while allowing the selectively connection of the reference optical filter element to the rest of the optical path.

Preferably said reference optical filter element optically connects said first output port of said input optical switch to said first input port of said output optical switch. In other words, said input optical switch and said output optical switch are configured such that, in said calibration configuration, they allow the optical signal to pass through said reference optical filter element, and in said operational configuration, they prevent the optical signal from passing through said reference optical filter element. In this way, it is created a simple structure capable of selectively making the optical input signal passing towards the reference optical filter element to properly recalibrate the device.

In one embodiment, each of said input optical switch and said output optical switch comprises, more preferably it consists of, a respective balanced Mach-Zehnder interferometer, having a respective input optical coupler and a respective output optical coupler (more preferably each coupler having a respective actuator).

Preferably said balanced Mach-Zehnder interferometer of said input optical switch is optically connected to said (remaining) portion of said optical path by means of one and only one port of the respective input optical coupler. In other terms said (single) input port of the input optical switch preferably corresponds to said one and only one port of the respective input optical coupler of the balanced MZI.

Preferably said balanced Mach-Zehnder interferometer of said output optical switch is optically connected to said respective (remaining) portion of said optical path by means of one and only one port of the respective output optical coupler. In other terms said (single) output port of the output optical switch preferably corresponds to said one and only one port of the respective output optical coupler of the balanced MZI.

One or more of the aforesaid features regarding the balanced MZIs of respectively the input optical switch and the output optical switch contribute to the advantages realization of the switches within the optical path, for example in terms of limiting the possible disturbs due to such switches, for example in terms of direct relationship between the measured optical intensity and the effective optical intensity of the signal to be analysed.

Preferably said reference module comprises an optical branch that directly optically connects said second output port of said input optical switch to said second input port of said output optical switch.

Preferably, in said operational configuration, said optical branch is optically connected to said optical path and made integral part of said optical path, for example by proper tuning of the input and output optical switches. In other words, in the operational configuration, the optical branch bypasses the reference optical filter element. In this way, the operational configuration, in which the overall transfer function of the device is not influenced by the presence of the reference optical element, is simply achieved.

In a preferred embodiment, said reference optical filter element comprises, more preferably consists of, a ring resonator.

The Applicant has observed that such type of optical filter element, given its transfer function having a peak (periodically repeated) characterized by a very narrow width (i.e. a very thin peak), particularly suits to the scope of the present invention. In this way the sharpness of these peaks provides a precise reference frequency value particularly advantageous for the calibration, making it easier to detect and align the optical system accurately.

Preferably said ring resonator comprises at least one micro-ring interposed between, and optically coupled to, two optical waveguides.

Preferably said ring resonator further comprises an input port and a drop port arranged on a different optical waveguide of said two optical waveguides with respect to the input port.

Preferably said ring resonator, in said calibration configuration, is optically connected to a respective (remaining) portion of said optical path only by means of said input port and only by means of said drop port. In other words, in the calibration configuration, the ring resonator is made integral part of the optical path by means of its input port and drop port. In this way, the transfer function of the reference optical filter element presents narrow peaks, to the advantage of the calibration.

Preferably a diameter of said micro-ring is greater than or equal to 1 µm, and/or less than or equal to 10 mm. In this way the desired FSR can be obtained in a structurally simple way.

In one embodiment said reference optical filter element comprises, or consists of, an unbalanced Mach-Zehnder interferometer (i.e. with one optical branch having a greater length than the other).

Preferably said unbalanced Mach-Zehnder interferometer comprises an input optical coupler, an output optical coupler. Preferably said unbalanced Mach-Zehnder further comprises a first and a second optical branch which connect said input optical coupler to said output optical coupler. Preferably a difference of optical path between said first and second optical branch of said unbalanced Mach-Zehnder interferometer is greater than zero.

Preferably said difference of optical path of said unbalanced Mach-Zehnder interferometer is greater than or equal to 1 µm. In this way the desired FSR can be obtained in a structurally simple way.

Preferably said difference of optical path of said unbalanced Mach-Zehnder interferometer is less than or equal to 10 mm. In this way the spatial extension of the reference optical module is limited, to the advantage of the overall dimensions of the device (e.g. for the specific use on supports of limited dimensions, such as for example integrated chips).

Preferably said unbalanced Mach-Zehnder interferometer, in said calibration configuration, is optically connected to a respective (remaining) portion of said optical path by means of one and only one first port of the input optical coupler and by means of one and only one second port of the output optical coupler. In this way the configuration is particularly simple.

Preferably said one and only one second port of the output optical coupler of said unbalanced Mach-Zehnder interferometer is arranged in cross configuration with respect to said one and only one first port of the input optical coupler of the respective unbalanced Mach-Zehnder interferometer. By cross configuration (or "cross port") it is meant that said one and only one second port belongs to an optical branch of the unbalanced Mach-Zehnder interferometer different from the optical branch to which said one and only one first port belongs (vice versa for the "bar door"). In this way, robust operation of the MZI is achieved, even against possible construction defects, as it is, for example, possible to achieve a desired spectral isolation (i.e. a transfer function of the MZI which nulls outside the respective bandwidth), to the further advantage of greater prominence of the reference frequency peaks in the overall transfer function of the device.

In one embodiment, said reference optical filter element comprises a plurality of unbalanced Mach-Zehnder interferometers optically connected to each other in cascade, more preferably in cross configuration between each other. In such embodiment, as transfer function of the reference optical filter element it has to be intended the convolution of the (individual) transfer functions of the plurality of unbalanced MZI. Without bounding to any theory, the Applicant believes that in this way it is possible to reduce the width of the reference peaks in the overall transfer function of the device.

Preferably said unbalanced MZIs of the reference optical filter element are arranged in continuous succession with each other (i.e., whatever the total number of unbalanced MZIs used, they are all arranged directly downstream of the previous one, without interruptions). In this way the reference element is kept structurally simple.

Preferably respective differences of optical path of said unbalanced Mach-Zehnder interferometers of said plurality of unbalanced MZIs of said reference optical filter element are all different from each other. In this way it is possible to suitably combine the transfer functions of each unbalanced MZI to further improve the reduction of width of the corresponding reference peaks.

Preferably said one or more optical filter elements comprise at least two optical filter elements arranged in cascade with each other.

Preferably said at least two optical filter elements comprise an unbalanced Mach-Zehnder interferometer and a ring resonator. In this way a desired overall transfer function of the device is enhanced, for example in terms of having a single peak within the optical band of interest with small width, in order to improve resolution of the OSA device.

Preferably the device comprises an actuator operatively coupled to each of said one or more optical filter elements, more preferably a respective actuator for each of said one or more optical filter elements.

Preferably said (each) actuator is configured for tuning said at least one operational parameter of each of said one or more optical filter elements. For example, the actuator is structured for varying an optical refractive index of at least one section of said optical path at each of said one or more optical filter elements. In this way it is allowed to vary the passband of the overall transfer function of the OSA device, in order to be able to scan the whole range of wavelengths of the optical signal and thus analyse the complete spectrum of the optical signal.

Preferably said operational parameter is an electric tension or an electric current. In this way the tuning is simple and efficient.

Preferably said reference optical module is arranged along said optical path at any position between said input port and said output photodetector (whenever a single polarization component of the electromagnetic signal insists on the optical path). In this way, it is ensured maximum flexibility and adaptability of the structure of the device.

Preferably, in case said device comprises a respective optical path for each of the two polarization components of the optical signal down to a respective photodetector (e.g. downstream of a polarization separator), the device further comprises a further reference optical module, the reference optical module and the further reference optical module being arranged along a respective optical path of a respective polarization component of said optical signal. In this way a reference optical module is created for each polarization component of the optical signal.

Preferably said further reference optical module possess one or more of, more preferably all, the features of said reference optical module. In this way the device is highly rational.

Preferably said first optical signal comprises an amplified spontaneous emission signal (ASE signal) or a flat optical signal along a whole bandwidth of interest. In this way the identification of the reference peaks is simplified, as for example explained below.

Preferably said second optical signal comprises an amplified spontaneous emission signal (ASE signal) and/or an unknown optical signal. In fact, the present invention, being based on the reference peaks of the reference optical filter element, which maintain themselves constant in frequency over time independently of the light signal introduced as input to the device, does not require a known optical signal to identify such reference peaks in order to perform the recalibration. In this way, it is ensured that the second phase can be easily carried out, as such signal is always present in amplified optical lines, or since it can exploit an unknown optical signal, e.g. the same optical signal to be analysed, to the advantage of on-field operation.

Preferably said first phase further comprises, before arranging said device in said calibration configuration, arranging said device in said operational configuration and (with said device in said operational configuration) introducing said first optical signal as input to said device and obtaining an overall transfer function of said device.

Preferably identifying said plurality of reference peaks comprises performing a subtraction between said reference transfer function of said device and said overall transfer function of said device. In this way the reference peaks due to the presence of the reference optical filter element along the optical path are easily detectable.

Preferably said first phase further comprises, before introducing said first optical signal as input with said device in said operational configuration, arranging said device in said operational configuration and (with said device in said operational configuration) introducing a calibration optical signal as input to said device and obtaining a calibrated overall transfer function of said device.

Preferably obtaining said calibrated overall transfer function comprises maximizing an optical intensity of said calibration optical signal at said output photodetector at a predetermined set of common frequencies (e.g. a set of frequencies obtainable by a tuneable laser source) by tuning at least one operational parameter of each of said one or more optical filter elements to obtain a respective first optimal operational parameter for each of said one or more optical filter elements. In this way the calibrated overall transfer function can be accurately characterized by ensuring optimal alignment of the optical filter elements.

Preferably said calibration optical signal is a tunable laser signal. In this way the operations are simplified.

Preferably said first phase further comprises, for each of said one or more optical filter elements, determining a respective first calibration curve as a function of each respective first optimal operational parameter and of each common frequency of said predetermined set of common frequencies. In this way the device is easily calibrated for the first time.

Preferably said method comprises, more preferably before said performing said second phase and subsequently to said performing said first phase, performing a fourth phase comprising:
- arranging said device in said operational configuration;
- analysing an optical spectrum of a fourth optical signal as a function of each respective first calibration curve of each optical filter element of said device. In this way the normal functioning of the device is performed with the first calibration.

In one embodiment said third optical signal and/or said fourth optical signal comprises said amplified spontaneous emission signal and/or an unknown optical signal (e.g. to be analysed). Preferably said performing said second phase is repeated cyclically over time. In this way, the device can adjust the operating parameters whenever the recalibration operation is necessary.

### Brief description of the drawings

Figure 1 shows a block diagram of the device according to the present invention;
figure 2 schematically shows a detail of the device of figure 1 according to the present invention;
figure 3 graphically shows an example of an overall transfer function and a reference transfer function of a device according to the present invention;
figure 4 graphically shows a re-calibration curve obtained by one embodiment of the method according to the present invention.

### Detailed description of some embodiments of the invention

The features and the advantages of the present invention will be further clarified by the following detailed description of some embodiments, presented by way of non-limiting example of the present invention, with reference to the attached figures (not to scale).

Number 1 in the figures indicates a device for analysis of optical spectrum of an optical signal. The device 1 comprises an input port 2, an output photodetector 3 and an optical path 4 which develops from the input port 2 to the output photodetector 3 to optically connect the input port 2 to the output photodetector 3.

Exemplarily the device 1 comprises at least two optical filter elements 50 arranged between the input port 2 and the output photodetector 3, each of them forming a respective portion of the optical path 4.

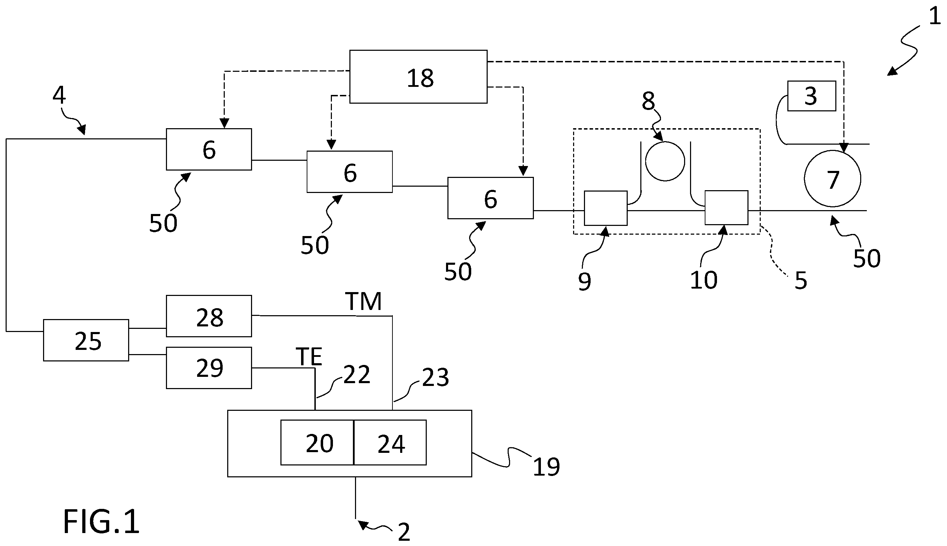

More in details, in the embodiment shown in figure 1, the device 1 comprises four optical filter elements 50 comprising three unbalanced Mach-Zehnder interferometer 6, connected to each other directly in cascade, and a ring resonator 7, not directly consequent to the last MZI.

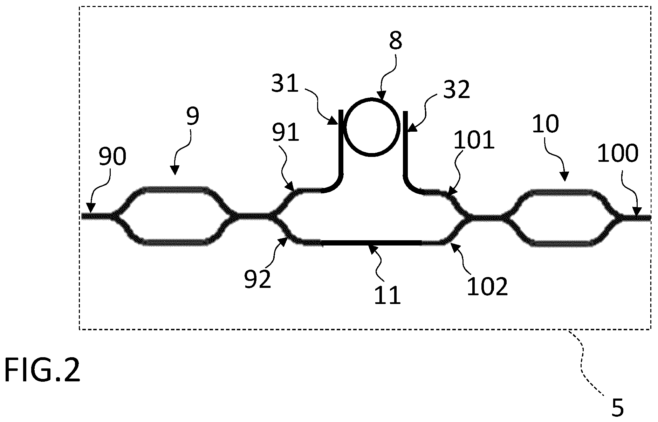

Exemplarily, the device 1 further comprises a reference optical module 5 (shown by dotted line in figures 1 and 2) arranged along said optical path 4.

Exemplarily the reference optical module 5 comprises an input optical switch 9, having an input port 90, a first 91 and a second output port 92, and an output optical switch 10, having an output port 100, a first 101 and a second input port 102.

Exemplarily the input optical switch 9 is optically connected to a remaining portion of the optical path 4 through the input port 90 and the output optical switch 10 is connected to a respective remaining portion of the optical path 4 through the output port 100. More in details, each of the input and output optical switch 9, 10 is generally always integral part of the optical path.

In one embodiment, as for example shown in figure 2, each of the input optical switch 9 and the output optical switch 10 consists of a respective balanced Mach-Zehnder interferometer (i.e. with the two optical branch having the same length), having a respective input optical coupler and a respective output optical coupler. Exemplarily the balanced Mach-Zehnder interferometer of the input optical switch 9 is optically connected to a remaining portion of the optical path 4 by means of one and only one port of the respective input optical coupler, and the balanced Mach-Zehnder interferometer of the output optical switch 10 is optically connected to a respective remaining portion of the optical path 4 by means of one and only one port of the respective output optical coupler. Exemplarily the one and only one port of the respective input optical coupler of the input optical switch 9 corresponds to the input port 90 of the input optical switch 9, and the one and only one port of the respective output optical coupler of the output optical switch 10 corresponds to the output port 100 of the output optical switch 10.

Exemplarily the reference module 5 comprises an optical branch 11 that directly (e.g. without the interposition of any optical elements/components except of the waveguide realizing the optical branch) optically connects the second output port 92 of the input optical switch 9 to the second input port 102 of the output optical switch 10.

The reference optical module 5 exemplarily comprises a reference optical filter element 8 arranged between, and optically connecting, the first output port 91 of the input optical switch 9 and/to the first input port 101 of the output optical switch 10.

The reference optical filter element 8 is a passive optical filter element.

The reference optical module 5 is exemplarily structured to allow the device 1 to selectively assume a calibration configuration in which the reference optical filter element 8 is optically connected to the optical path 4 to make the reference optical filter element 8 integral part of the optical path 4, and an operational configuration in which the reference optical filter element 8 is excluded from the optical path 4. In details, exemplarily the optical branch 11, in the operational configuration, is optically connected to the optical path 4 to make the optical branch 11 integral part of the optical path 4, thus bypassing the reference optical filter element 8.

Exemplarily, the transition between from the calibration configuration to the operational configuration and vice-versa is obtained by proper driving of the input 9 and output optical switch 10 by respective actuators (not shown).

In the embodiment shown in figure 1 and 2, the reference optical filter element 8 comprises solely a ring resonator.

Alternatively, in another embodiment (not shown), the reference optical filter element 8 can comprise a single unbalanced Mach-Zehnder interferometer.

In yet another embodiment, the reference optical filter element 8 can comprise a plurality of unbalanced Mach-Zehnder interferometers optically connected to each other in cascade, preferably in cross configuration between each other. Exemplarily, in such embodiment, the unbalanced MZIs of the reference optical filter element are arranged in continuous succession with each other and/or respective differences of optical path of the unbalanced Mach-Zehnder interferometers are all different from each other.

The unbalanced Mach-Zehnder interferometer of the reference optical filter element 8 exemplarily comprises an input optical coupler, an output optical coupler and a first and second optical branch which connect the input optical coupler to the respective output optical coupler. The unbalanced Mach-Zehnder interferometer of the reference optical filter element 8, in the calibration configuration, is optically connected to a remaining portion of the optical path 4 by means of one and only one first port of the input optical coupler and by means of one and only one second port of the output optical coupler.

Exemplarily the one and only one second port of the output optical coupler of the Mach-Zehnder interferometer is arranged in cross configuration with respect to the one and only one first port of the input optical coupler of the Mach-Zehnder interferometer (i.e. it belongs to a different optical branch).

In one embodiment, the one and only one second port of the output optical coupler of the Mach-Zehnder interferometer is a bar port.

Exemplarily, the ring resonator of the reference filter optical element 8 (figure 1 and 2), comprises a single micro-ring interposed and optically coupled to two optical waveguides, an input port 31 and a drop port 32 arranged on a different optical waveguide with respect to the input port 31.

Exemplarily, the ring resonator of the reference optical filter element 8, in the calibration configuration, is optically connected to a respective remaining portion of the optical path 4 only by means of the input port 31, and only by means of the drop port 32.

Exemplarily, in the shown embodiment, the first output port 91 of the input optical switch 9 is directly optically connected to the input port 31 of the ring resonator of the reference optical filter element 8, while, in other embodiments, the first output port 91 is directly optically connected to the one and only one first port of the input optical coupler of the (first - in case of plurality) unbalanced Mach-Zehnder interferometer of the reference optical filter element 8.

Furthermore, exemplarily, in the shown embodiment, the first input port 101 of the output optical switch 10 is directly optically connected to the drop port 32 of the ring resonator of the reference optical filter element 8, while, in other embodiments, the first input port 101 is directly optically connected to the one and only one second port of the output optical coupler of the (last - in case of plurality) unbalanced Mach-Zehnder interferometer of the reference optical filter elements 8.

Exemplarily the reference optical filter element 8 is structured such that a free spectral range of a transfer function respectively of the reference optical filter element 8 is smaller than each free spectral range of a respective transfer function of each of the optical filter elements 6, 7. For example, each free spectral range of the transfer function of respectively the reference optical filter element 8 is at least two times smaller than the abovesaid each free spectral range of the respective transfer function of each of the one or more optical filter elements 6, 7.

For example, the diameter of the ring resonator of the reference optical filter element the shown embodiment or the difference of optical path of the unbalanced MZI (or each difference of optical path in case of plurality of unbalanced MZI) of the reference optical filter element in other embodiments are structurally realized in order to obtain the abovesaid feature regarding the free spectral range of the corresponding reference optical filter element. In fact, as known, the free spectral range (as well other characteristics of the transfer function) of an optical filter element may be adjusted by properly realizing the physical structure of the optical element.

For example, a diameter of the micro-ring is greater than or equal to 1 µm, and/or less than or equal to 10 mm, or the difference of optical path of the unbalanced Mach-Zehnder interferometer can be comprised between 1 µm and 10 mm, extremals included.

Exemplarily, the device 1 further comprises an actuator 18, coupled to each optical filter element 50, in particular to each of the Mach-Zehnder interferometers 6 and the ring resonator 7, and configured for tuning at least one operational parameter OP of each of the one or more optical filter elements 50. In particular the actuator 18 is configured to vary an optical refractive index of at least one section of the optical path 4 realized by the optical filter element 50.

For example, the actuator can exploit the thermo-optical effect, or the electro-optical effect, or both. In one embodiment, the actuator can be structured to vary the optical refractive index at one (or both) of the branches of one or more of the MZIs or of the ring resonator, for example as known. In one embodiment, the actuator can be structured to directly vary the optical refractive index of one or more of the MZIs directly at level of one or both of the respective optical couplers, as for example described in patent applications no. WO2023/053153 and no. WO2023/053154 in the name of the same Applicant.

Exemplarily the operational parameter OP is an electric tension or an electric current.

Exemplarily the device 1 also comprises a pre-treatment stage 19 of the optical signal downstream of the input port 2. Exemplarily the pre-treatment stage 19 comprises a polarization separator 20 for separating a first polarization component TE (e.g. a transverse electric polarization component) from a second polarization component TM (e.g. transverse magnetic) of the optical signal.

Exemplarily the pre-treatment stage 19 comprises a respective input port, exemplarily coincident with the input port 2, and a respective first 22 and a respective second output port 23 (respectively for the first and second polarization component).

Exemplarily the pre-treatment stage 19 further comprises a polarization rotator 24 for rotating a polarization of the second polarization component TM of the optical signal (e.g. by 90°).

In a first embodiment (fig. 1) the device 1 comprises a further optical coupler 25 (distinct from the optical filter elements 6, 7 and from the reference optical filter elements 8) interposed between the pre-treatment stage 19 and the first of the optical filter elements 6, 7.

Exemplarily the first 22 and the second output port 23 of the pre-treatment stage 19 are directly optically connected respectively to one and only one respective first port of the further optical coupler 25, and one and only one second port of the further optical coupler 25 is directly optically connected to one of the optical filter elements 50 (in figure 1, the first optical filter element 50 is the unbalanced Mach-Zehnder interferometer 6), in more detail directly optically connected to one and only one first port of the input optical coupler of the Mach-Zehnder interferometer 6.

Exemplarily the further optical coupler 25 is a tuneable balanced Mach-Zehnder interferometer with a splitting ratio variable from 0-100. Exemplarily the device 1 further comprises a first 28 and a second optical switch 29 (e.g. a variable optical attenuator or VOA) respectively interposed between the respective first 22 and second output port 23 of the pre-treatment stage 19 and the corresponding first port of the further optical coupler 25.

Exemplarily the reference optical module 5 is arranged along the optical path 4 at any position between the input port 2 and the output photodetector 3 whenever a single polarization component of the electromagnetic signal insists on the optical path, for example at any position directly downstream the first 22 and second output port 23 and directly upstream the output photodetector 3.

Exemplarily, in case (not shown) the reference optical module 5 is arranged along a respective optical path for the first polarization component TE of the optical signal (i.e. directly downstream of the polarization separator 20), the device 1 may advantageously comprise a further reference optical module arranged along the respective optical path for the second polarization component TM of the optical signal, the further reference optical module having all the features of the reference optical module 5.

Exemplarily the device 1 comprises semiconductor optical waveguides to connect the various optical elements described above. Exemplarily the device 1 can be made on any semiconductor photonics platform such as for example silicon, silicon on insulator, silicon nitride, indium phosphide, silicon carbide, gallium arsenide, lithium niobate or any other semiconductor waveguide platform.

For example, the OSA device 1, as far as herewith compatible and with exception of the reference optical module 5, may be of the type disclosed in document WO2024/062509 in the name of the same Applicant.

In use, the device 1 allows to perform a method for analysis of optical spectrum of an optical signal.

Initially the method exemplarily comprises performing a first phase.

Exemplarily the first phase comprises, as first step, arranging, e.g. by action on the input 9 and the output optical switch 10, the device 1 in the operational configuration, i.e. with the optical branch 11 made integral part of the optical path 4 and the reference optical filter element 8 excluded from the optical path 4.

Exemplarily, it is thus provided, with the device 1 still in the operational configuration, introducing a calibration optical signal (not shown) as input to the device 1 and obtaining a calibrated overall transfer function of the device 1. For example, the calibration optical signal can be an optical laser signal which is tuneable over a range of wavelengths (e.g. from about 700nm to 1.700nm).

Exemplarily obtaining the calibrated overall transfer function comprises maximizing an optical intensity of the first optical signal at the output photodetector 3 at a predetermined set of common frequencies (e.g. a set of frequencies obtainable by the tuneable laser source) by tuning at least one operational parameter of each of the one or more optical filter elements 50 to obtain a respective first optimal operational parameter for each of the one or more optical filter elements 50.

Consequently, it is also exemplarily provided, for each of the one or more optical filter elements 50, determining a respective first calibration curve as a function of each respective first optimal operational parameter and of each common frequency of the predetermined set of common frequencies. In other words, the device 1 is calibrated over frequencies without the presence of the reference optical filter element 8 in the optical path 4.

Exemplarily, it is thus provided, with the device 1 still in the operational configuration, introducing a first optical signal (not shown) as input to the device 1 and obtaining an overall transfer function FdT_{OSA} of the device 1. For example, the first optical signal can be an amplified spontaneous emission signal (ASE signal) or a flat optical signal along a whole bandwidth of interest (e.g. 1520-1580 nm).

Figure 3 shows, in a space dB-frequency, an example of an overall transfer function FdT_{OSA} of the device 1 after the abovesaid calibration. Exemplarily, the overall transfer function is generally characterized by a single peak in the optical bandwidth of interest, with a relative thin width.

Subsequently, it is exemplarily provided arranging the device 1 in the calibration configuration, exemplarily by action on the input 9 and the output optical switch 10 to optically connect the reference optical filter element 8 to the optical path 4 to make the reference optical filter element 8 integral part of the optical path 4 (thus excluding the optical branch 11).

In the first phase the method thus exemplarily comprises introducing the (same) first optical signal as input to the device 1 and, with the first optical signal introduced into the device, obtaining a reference transfer function FdT_{ref} of the device 1, due to the contributions of each of the optical filter elements 50 and (at least) the reference optical filter element 8.

As a consequence, since the reference optical filter element 8 is probably the sole element not tuned in harmony with the other optical filter elements 50, the reference transfer function can generally assume the form depicted in figure 3. More in details, the reference transfer function may exhibit a plurality of local peaks on the trend of the overall transfer function.

The free spectral range (FSR) of the reference optical filter element 8 exemplarily corresponds to the distance between two consecutive local peaks of the reference transfer function FdT_{ref}. It is visible that the FSR of the reference optical filter element 8 is smaller than each of the FSR of each optical filter elements 50.

It is therefore exemplarily provided identifying a plurality of reference peaks among the above local peaks, for example at least two, more preferably at least five, different reference peaks, and storing in memory a respective frequency pᵢ of each reference peak of the plurality of reference peaks.

Exemplarily identifying the plurality of reference peaks comprises performing a subtraction between the reference transfer function FdT_{ref} of the device 1 and the overall transfer function FdT_{OSA} of the device 1.

After the first phase, the method exemplarily comprises deploying the device 1 on normal operation to analyse the optical spectrum of optical signals given as input to the device. Exemplarily, such normal operation of the device is performed in a fourth phase of the method. Exemplarily performing the fourth phase comprises arranging the device 1 in the operational configuration (e.g. by action on the input 9 and the output optical switch 10 to exclude the reference optical filter element 8 from the optical path 4) and introducing a fourth optical signal (i.e. any signal to be analysed) into the device 1, and analysing the optical spectrum of the fourth optical signal as a function of each respective first calibration curve of each optical filter element 50 of the device 1.

In the first embodiment, the method exemplarily also comprises actuating one of the two optical switches 28, 29 to make transit, towards the further optical coupler 25, only one polarization component at a time. The further optical coupler 25 is then consequently tuned to allow maximum bar or cross transfer depending on the input polarization component to be transmitted to the optical filter stage. For example, if it is desired to transmit the polarization component TE to the remaining portion of the device, it is provided activating the first switch 28 to preclude the transmission of the TM component and tuning the further optical coupler 25 in cross configuration (so that the TE component entirely passes through the further optical coupler). The opposite applies for the TM component. For example, it may be provided analysing the optical intensity of the TE component only in the optical signal band and subsequently perform the same for the TM component.

In another embodiment (not shown), the method exemplarily comprises simultaneously analysing both the polarization components TE and TM, which therefore simultaneously pass through the device, with opposite propagation directions.

The method exemplarily comprises, subsequently to the fourth phase, for example in case the optical intensity of the fourth optical signal at the output photodetector 3 is not maximized anymore and/or periodically at a predetermined time, performing a second phase comprising arranging the device 1 again in the calibration configuration.

The second phase thus exemplarily comprises introducing a second optical signal as input to the device 1. The second optical signal is not necessarily different from the fourth optical signal and/or can be or comprise an amplified spontaneous emission (ASE) signal.

Exemplarily the second phase further comprises, for each respective reference frequency pᵢ, maximizing an optical intensity of the second optical signal at the output photodetector 3 by tuning at least one operational parameter OP of each optical filter elements 50, exemplarily in a neighbourhood of the respective first optimal operational parameter, to obtain a respective optimal operational parameter OPₒₚₜ for each optical filter element 50.

Performing the second phase thus exemplarily comprises, for each optical filter element 50, determining a respective calibration curve as a function of each respective optimal operational parameter OPₒₚₜ and of each reference frequency pᵢ.

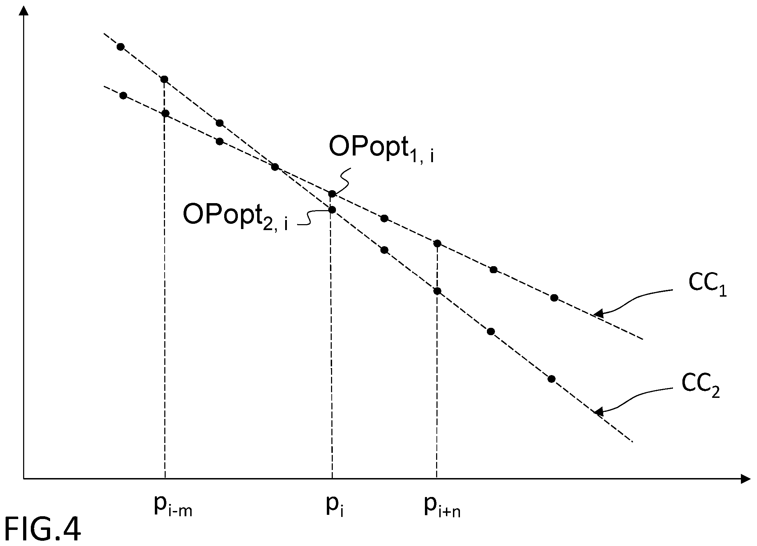

For example, figure 4 shows two respective calibration curve CC₁, CC₂, for respectively two different optical filter elements 50 (for example a MZI 6 and the ring resonator 7). Each calibration curve is obtained by the linear interpolation between the respective optimal parameters OPopt_{1,i} and OPopt_{2,i} plotted in figure as function of the reference frequencies pᵢ. Exemplarily each first calibration curve is therefore substituted by the calibration curve obtained in the second phase.

The method exemplarily comprises, once the second phase is performed, performing a third phase in which the device 1 is arranged again in the operational configuration. The third phase exemplarily comprises introducing a third optical signal (not necessarily different form the second and/or the fourth signal) and analysing the optical spectrum of the third optical signal as a function of each respective calibration curve of each optical filter element 50 of the device 1 obtained in the previous second phase.

Exemplarily the third phase is conceptually similar to the fourth phase, in the sense that both the third and the fourth phases are normal operation phase of the device 1, the fourth performed after the first calibration of the device (e.g. performed at the laboratory or at factory), while the (each) third phase follows a on-field recalibration of the device 1 as descripted with reference to the second phase above.

In fact, the method exemplarily further comprises performing the second phase cyclically over time whenever needed, for example when the optical intensity of the third optical signal at the output photodetector is not maximized (e.g. fact known from other source) or periodically at a predetermined time.

## Claims

1. Device (1) for analysis of optical spectrum of an optical signal, said device (1) comprising an input port (2), an output photodetector (3) and an optical path (4) which develops from said input port (2) to said output photodetector (3) to optically connect the input port (2) to the output photodetector (3),
wherein said device (1) comprises one or more optical filter elements (50) arranged between said input port (2) and said output photodetector (3) and each forming a respective portion of said optical path (4),
wherein said device (1) comprises a reference optical module (5) arranged along said optical path (4) and comprising a reference optical filter element (8),
wherein said reference optical module (5) is structured to allow said device (1) to selectively assume a calibration configuration in which said reference optical filter element (8) is optically connected to said optical path (4) to make the reference optical filter element (8) integral part of said optical path (4), and an operational configuration in which the reference optical filter element (8) is excluded from said optical path (4),
wherein said reference optical filter element (8) is a passive optical filter element,
and wherein said reference optical filter element (8) is structured such that a free spectral range of a transfer function of said reference optical filter element (8) is smaller than each free spectral range of a respective transfer function of each of said one or more optical filter elements (50).

2. Device (1) according to claim 1, wherein said free spectral range of the transfer function of said reference optical filter element is at least two times smaller than said each free spectral range of a respective transfer function of each of said one or more optical filter elements (50).

3. Device (1) according to anyone of the previous claims, wherein said reference optical module (5) comprises an input optical switch (9) having an input port (90) and a first (91) and a second output port (92), and an output optical switch (10) having a first (101) and a second input port (102) and an output port (100), wherein said input optical switch (9) is optically connected to a portion of said optical path (4) through said input port (90) of said input optical switch (9), and wherein said output optical switch (10) is optically connected to a further portion of said optical path (4) through said output port (100) of said output optical switch (10), and wherein said reference optical filter element (8) optically connects said first output port (91) of said input optical switch (9) to said first input port (101) of said output optical switch (10).

4. Device (1) according to claim 3, wherein said reference module (5) comprises an optical branch (11) that directly optically connects said second output port (92) of said input optical switch (9) to said second input port (102) of said output optical switch (10), and wherein said optical branch (11), in said operational configuration, is optically connected to said optical path (4) to make the optical branch (11) integral part of said optical path (4).

5. Device (1) according to any one of the previous claims, wherein said reference optical filter element (8) comprises a ring resonator.

6. Device (1) according to claim 5, wherein said ring resonator comprises at least one micro-ring interposed between, and optically coupled to, two optical waveguides, and an input port (31) and a drop port (32) arranged on a different optical waveguide of said two optical waveguides with respect to the input port (31), and wherein, in said calibration configuration, said ring resonator is optically connected to a respective portion of said optical path (4) only by means of said input port (31) and only by means of said drop port (32).

7. Device according to any one of the previous claims, wherein said reference optical filter element comprises an unbalanced Mach-Zehnder interferometer or a plurality of unbalanced Mach-Zehnder interferometers optically connected to each other in cascade.

8. Device according to any one of the previous claims, wherein said one or more optical filter elements comprises at least two optical filter elements arranged in cascade with each other, and wherein said at least two optical filter element comprises an unbalanced Mach-Zehnder interferometer and a ring resonator.

9. Method for analysis of optical spectrum of an optical signal, said method comprising:
- providing the device (1) for analysis according to any one of the claims from 1 to 8;
- performing a first phase comprising:
- arranging said device (1) in said calibration configuration;
- introducing a first optical signal as input to said device (1) and obtaining a reference transfer function (FdT_{ref}) of said device (1);
- identifying a plurality of reference peaks of said reference transfer function (FdT_{ref}) due to said reference optical filter element (8) being integral part of said optical path (4), and storing in memory a respective reference frequency (pᵢ) of each reference peak of said plurality of reference peaks;
- subsequently to said performing said first phase, performing a second phase comprising:
- arranging said device (1) in said calibration configuration;
- introducing a second optical signal as input to said device (1);
- for each respective reference frequency (pᵢ), maximizing an optical intensity of said second optical signal at said output photodetector (3) by tuning at least one operational parameter (OP) of each of said one or more optical filter elements (50) to obtain a respective second optimal operational parameter (OPopt) for each of said one or more optical filter elements (50);
- for each of said one or more optical filter elements (50), determining a respective second calibration curve (CC) as a function of each respective second optimal operational parameter (OPopt) and of each reference frequency (pᵢ);
- subsequently to said performing said second phase, performing a third phase comprising:
- arranging said device (1) in said operational configuration;
- analyzing an optical spectrum of a third optical signal as a function of each respective second calibration curve (CC) of each optical filter element (50) of said device (1).

10. Method according to claim 9, wherein said first optical signal comprises an amplified spontaneous emission signal or a flat optical signal along a whole bandwidth of interest, and wherein said second optical signal comprises an amplified spontaneous emission signal and/or an unknown optical signal.

11. Method according to claim 9 or 10, wherein said first phase comprises, before arranging said device (1) in said calibration configuration, arranging said device (1) in said operational configuration and introducing said first optical signal as input to said device (1) and obtaining an overall transfer function (FdT_{OSA}) of said device (1), and wherein identifying said plurality of reference peaks comprises performing a subtraction between said reference transfer function (FdT_{ref}) of said device (1) and said overall transfer function (FdT_{OSA}) of said device (1).

12. Method according to any one of the claims from 9 to 11, wherein said performing said second phase is repeated cyclically over time.
